# EUROPEAN PATENT APPLICATION

(11) **EP 1 197 915 A1**
(43) Date of publication of application: **17.04.2002**
(21) Application number: 00203537.6
(22) Date of filing: 13.10.2000
(51) Int. Cl.: G06K 11/18

(54) **computer mouse**

(71) Applicant: Robinson, Matthew Hercules, 1107 XK Amsterdam (NL); Harding, Matthew Charles, 1035 NE Amsterdam (NL)
(72) Inventor: Robinson, Matthew Hercules, 1107 XK Amsterdam (NL); Harding, Matthew Charles, 1035 NE Amsterdam (NL)
(74) Representative: Voncken, Bartholomeus Maria Christiaan

(57) **Abstract**

A computer mouse is provided, comprising a hand held part having incorporated therein computer operating devices such as a trackball and/or function keys for operation by the fingers of a user, and a base unit part for connection to the computer, wherein the hand held part is operatively connected to the base unit part, preferably by radio means, and wherein the base unit part is shaped with a recess for receiving the hand held part in such a way that the operating devices of latter still may be operated.

## Description

The invention relates to a computer mouse.

In modern society the use of computers is constantly increasing. One of the disadvantages, however, of such a steady increase of the use of computers is, that users of computers and computer relates devices frequently suffer from so-called repetitive strain injury (RSI). Although the exact causes of RSI are not yet fully understood, it is believed, among others, that a constant repetition of the same movements contributes to the occurrence of RSI. Further, unnatural positions of the body, and especially of the hands and the arms, of the user of a computer and computer relates devices, such as key boards and computer mouses, is considered to be a possible course of RSI.

In the field of computers attempts have been made to improve the conventional computer mouse design. Examples are shown in United States patent 5,668,574, disclosing a palm-top wireless trackball with a ergonomically engineered hand held portion, and in European patent application 940,764 illustrating a computer mouse with a mouse casing body that is U-arc shaped.

It is an object of the present invention to provide a computer mouse with a novel design, which will contribute to the elimination of repetitive strain injury as caused by conventional computer mouses.

Thus, the invention provides a computer mouse, comprising a hand held part having incorporated therein computer operating devices such as a trackball and/or function keys for operation by the fingers of a user, and a base unit part for connection to the computer, wherein the hand held part is operatively connected to the base unit part, preferably by radio means, and wherein the base unit part is shaped with a recess for receiving the hand held part in such a way that the operating devices of latter still may be operated.

A unique aspect of the computer mouse according to the invention is, that it is a two-part structure, comprising firstly a hand held part and secondly a base unit part for receiving the hand held part. When the hand held part is held in the hand, the user can freely move his/her hand around while operating the computer operating devices incorporated in the hand held part. Thus, the user can vary its body position in an unlimited manner and thereby avoid making the same movements all over again. Further there are then no objections against assuming a natural body position. However, when positioned in the base unit part, the operating devices of the hand held part still may be operated, such that the computer mouse according to the invention then may be used as a conventional computer mouse.

Therefore, the computer mouse according to the invention is versatile, in that it may be used as a hand held part and as a conventional computer mouse positioned on a tabletop.

According to a preferred embodiment of the computer mouse the hand held part is ergonomically shaped with finger-receiving recesses, such that the operating devices are operable by the thumb of the user.

Due to the ergonomic shape of the hand held part the hand of a user will assume a natural position, such as to further reduce the risk of suffering from RSI.

Further, it is preferred that the base unit part with hand held part received therein has a form adapted to the natural form of a human hand and such that the operating devices of the hand held part are operable by the index finger of the user. This feature further contributes to a natural position of the arm and shoulder of a user when the hand held part is positioned into the base unit part. Now, while using the computer mouse, the arm can rest on a surface, like a tabletop, from wrist to elbow. With conventional computer mouses the elbow is positioned at some distance above the tabletop.

As stated, the hand held part is operatively connected to the base unit part by radio means. Connection by radio means may be maintained when the hand held part is received within the recess of the base unit part. However, it is conceivable too that the base unit part and hand held part are provided with co-operating connection means for creating a direct operative connection therebetween when the hand held part is received within the recess of the base unit part.

Further, in a preferred embodiment of the computer mouse according to the invention, it is envisaged that the hand held part is provided with rechargeable energy means, wherein the base unit part is provided with charging means for recharging said energy means when the hand held part is received within the recess of the base unit part.

Recharging the energy means of the hand held part occurs automatically when the hand held part is received within the recess of the base unit part. This may be the case both when the hand held part is used and when the hand held part is not used.

The charging means of the base unit part may comprise means operating through induction.

Whereas the basic connection between the hand held part and the base unit part comprise radio means, it is preferred that the base unit part is connected to the computer through a cable connection. The base unit part is then simply plugged into the mouse port of the computer.

The invention will be further elucidated by means of the drawing, in which an embodiment of the computer mouse according to the invention is illustrated.

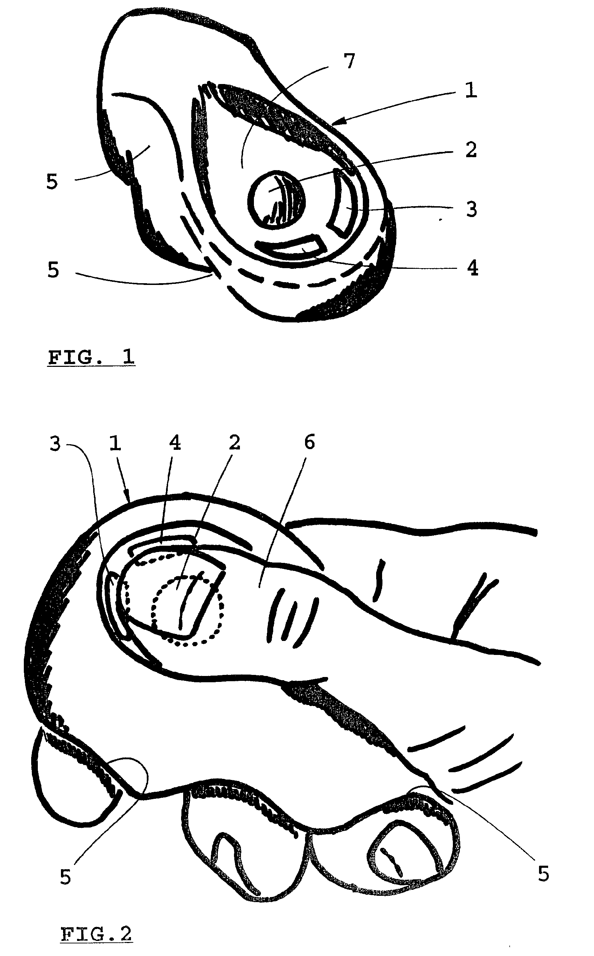

Figure 1 shows an embodiment of a hand held part of a computer mouse according to the invention;
figure 2 shows the hand held part of fig. 1 in the hand of a user;
figure 3 shows the hand held part of fig. 1 in combination with a base unit part, previous to being received therein;
figure 4 shows the hand held part after being received in the base unit part, and
figure 5 shows the computer mouse as positioned on a surface and while being used by a user.

The computer mouse according tot the invention firstly comprises a hand held part 1 having incorporated therein computer operating devices such as a trackball 2 and function keys 3 and 4 for operation by the fingers of a user. The hand held part 1 is ergonomically shaped with finger receiving recesses 5, such that the hand held part 1 can be positioned such in the hand of a user that the operating devices are operable by the thumb 6 (see fig. 2) of the user.

In the illustrated embodiment of the hand held part 1 the trackball 2 and function keys 3 and 4 are positioned in a depression 7 which is thumb-shaped.

Due to the ergonomic shape of the hand held part 1 it may be manipulated with ease while the hand of the user assumes a natural position. Thus RSI and similar injuries may be effectively prevented.

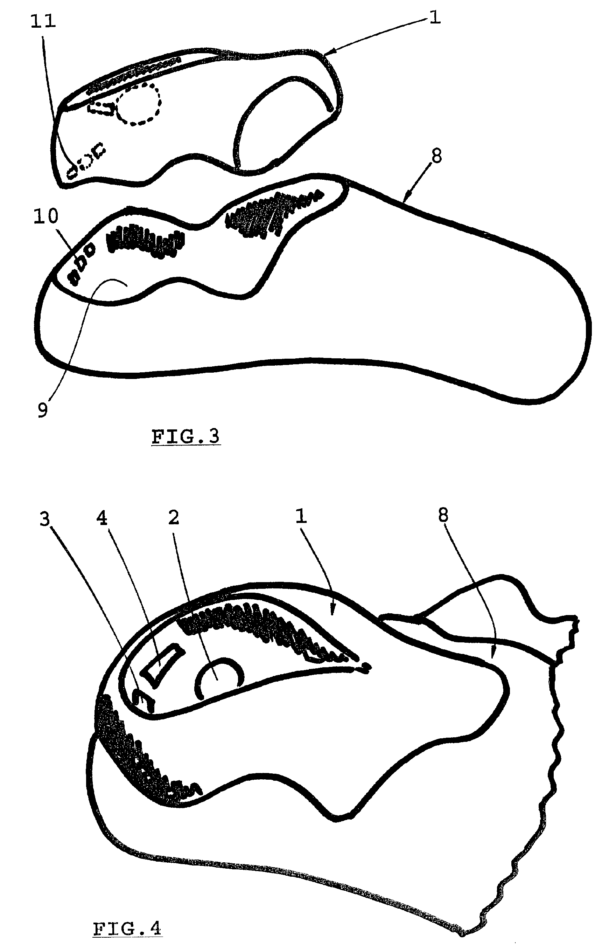

The computer mouse according to the invention further comprises a base unit part 8 as illustrated in figure 3. This base unit part is connected (for example through a cable connection not illustrated) to the computer, especially the mouse port of the computer. An operative connection between the base unit part 8 and the hand held part 1 is created by radio means.

The base unit part 8 is shaped with a recess 9 for receiving the hand held part 1, as illustrated in figure 4. In the embodiment illustrated the base unit part 8 and hand held part 1 are provided with co-operating connection means 10 and 11 for creating a direct operative connection therebetween when the hand held part 1 is received within the recess 9 of the base unit part 8, such as shown in figure 4.

Alternatively it would be possible, however, that also in the situation illustrated in figure 4 an operative connection between the base unit part 8 and hand held part 1 is maintained by radio means.

The hand held part 1 may be provided with rechargeable energy means (such as rechargeable batteries), not shown, wherein the base unit part 8 then may be provided with charging means for recharging said energy means when the hand held part 1 is received within the recess 5 of the base unit part. Such charging means of the base unit part 8 may operate through the connection means 10 and 11, through separate connection means or, alternatively, through induction.

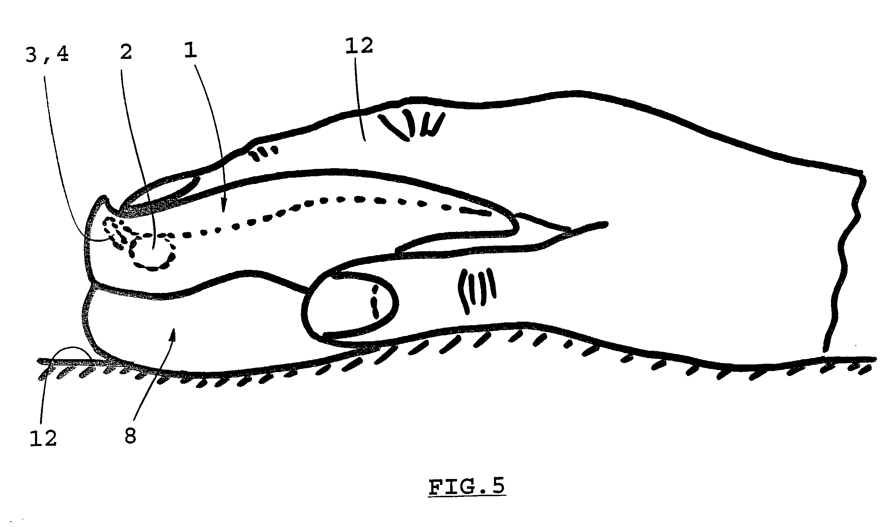

When the hand held part 1 is received within the recess 9 of the base unit part 8, the combination of hand held 1 and base unit part 8 has a form adapted to the natural form of a human hand, see figure 5. In this situation the computer mouse according to the invention may be engaged by the hand of a user of which the arm rests on a tabletop from wrist to elbow, such, that the operating devices (track ball 2 and function keys 3 and 4) are operable by the index finger 12 of the user. Thus, the computer mouse also may be used comfortably while resting on the surface 12, such as a tabletop.

The invention is not limited to the embodiment described before, which may be varied widely within the scope of the invention as defined by the claims. Thus, the expression "radio means" is to be understood as comprising also other wireless connections, such as by infra-red beams. Moreover a cable connection between the hand held part and the base unit part would be possible, although this would not promote the freedom of movement of the former.

## Claims

1. Computer mouse, comprising a hand held part having incorporated therein computer operating devices such as a trackball and/or function keys for operation by the fingers of a user, and a base unit part for connection to the computer, wherein the hand held part is operatively connected to the base unit part, preferably by radio means, and wherein the base unit part is shaped with a recess for receiving the hand held part in such a way that the operating devices of latter still may be operated.

2. Computer mouse according to claim 1, wherein the hand held part is ergonomically shaped with finger-receiving recesses, such that the operating devices are operable by the thumb of the user.

3. Computer mouse according to claim 1 or 2, wherein the base unit part with hand held part received therein has a form adapted to the natural form of a human hand and such that the operating devices of the hand held part are operable by the index finger of the user.

4. Computer mouse according to claim 1, 2 or 3, wherein the base unit part and hand held part are provided with co-operating connection means for creating a direct operative connection therebetween when the hand held part is received within the recess of the base unit part.

5. Computer mouse according to one of the previous claims, wherein the hand held part is provided with rechargeable energy means and wherein the base unit part is provided with charging means for recharging said energy means when the hand held part is received within the recess of the base unit part.

6. Computer mouse according to claim 5, wherein the charging means of the base unit part are means operating through induction.

7. Computer mouse according to one of the previous claims, wherein the base unit part is connected to the computer through a cable connection.
